# FASCICULE DE BREVET EUROPEEN

(11) **EP 2 726 855 B1**
(45) Date de publication et mention de la délivrance du brevet: **09.01.2019**
(21) Numéro de dépôt: 12732536.3
(22) Date de dépôt: 27.06.2012
(51) Int. Cl.: G01N 21/89, G01N 21/894, B65D 5/32, B65D 5/46, B65D 77/06, B65D 71/14, B65D 71/30, B65D 71/28, B65D 71/38, B65D 5/04, B65D 5/02

(54) **DISPOSITIF DE DETECTION ET MACHINE D'ENDUCTION D'UN SUPPORT PLAN AINSI EQUIPEE**
ERKENNUNGSVORRICHTUNG UND EINE DAMIT AUSGERÜSTETE MASCHINE ZUR BESCHICHTUNG EINER EBENEN AUFLAGEFLÄCHE
DETECTION DEVICE AND MACHINE FOR COATING A PLANAR SUBSTRATE PROVIDED WITH SAME

(30) Priorité: 01.07.2011 EP 11005373
(43) Date de publication de la demande: 07.05.2014
(73) Titulaire: BOBST MEX SA, 1031 Mex (CH)
(72) Inventeur: MATHYS, Felix, 1096 Cully (CH); RAGGI, Robert, 1024 Ecublens (CH)
(86) Numéro de dépôt international: PCT/EP2012/002702
(87) Numéro de publication internationale: WO 2013/004358

(56) Documents cités:
- EP-A2- 1 249 530
- WO-A1-2005/085813
- WO-A1-2008/004256
- WO-A2-2004/086009
- JP-A- 1 153 944
- US-A- 3 409 779
- US-A- 3 859 538
- US-A- 4 728 800
- US-A- 5 164 603
- US-A- 6 104 037
- US-A1- 2007 057 208

## Description

La présente invention concerne un dispositif de détection apte à analyser un support plan. L'invention se rapporte également à une machine pour enduire un support plan, par exemple un support en bande continue, équipée avec un dispositif de détection.

Des supports en bande continue, par exemple des films en matériaux flexibles enduits, ceux entre autres destinés à l'emballage, sont obtenus par enduction, à titre d'exemple par évaporation d'aluminium sous vide. Le procédé d'enduction s'effectue dans une machine au niveau d'une zone d'évaporation d'une chambre à vide, typiquement de 1 x 10⁻⁴ mbar à 1 x 10⁻⁶ mbar. Le support vierge, généralement un film plastique flexible, par exemple d'une épaisseur comprise entre 5 µm et 35 µm, est introduit dans la machine sous la forme d'une première bobine. Le vide est fait au sein de la machine.

Le film est déroulé et défile à des vitesses allant jusqu'à 1500 m/min. Le film est refroidi par exemple au contact d'un tambour refroidi, lorsqu'il passe au dessus de la source d'évaporation, ou lorsqu'il se trouve après la source d'évaporation. Dans le cas d'une enduction de métal, des fils métalliques, par exemple d'aluminium ultra-pur, sont amenés respectivement sur une série d'évaporateurs céramiques résistifs disposés sur la laize. Les fils d'aluminium fondent et s'évaporent à cet endroit. La vapeur d'aluminium se condense sur le support formant ainsi la couche d'enduit. Le film enduit est ensuite enroulé sur une deuxième bobine. La machine est remise à pression ambiante et la deuxième bobine est sortie.

Un tel procédé génère cependant des défauts au niveau du support enduit, par exemple des trous ou des micro-trous dans l'enduction, connus sous le nom de « pinholes », des variations d'épaisseurs de l'enduction, des absences d'enduction formant donc des grands trous, des griffures, des éraflures, des éclaboussures, des lignes doubles parallèles ou « tramway line », des nuages de micro-trous, voire des perforations du support enduit.

Pour diminuer la gâche de support enduit non-conforme et optimiser le procédé d'enduction, la qualité de l'enduction à la surface du support enduit obtenu doit être surveillée sur toute la laize du support enduit obtenu et doit être améliorée en conséquence.

### Etat de la technique

Le document WO- 2004/ 086'009 décrit un dispositif pour détecter des trous dans des feuilles en acier défilant en continu. Le dispositif comprend tout d'abord un premier élément optique émetteur de lumière en direction de la feuille défilant. Le dispositif comprend ensuite un deuxième élément optique récepteur de lumière en provenance du premier élément optique et susceptible de passer à travers les trous de la feuille de matériau défilant.

Le premier élément optique émetteur comprend une rampe de boîtiers disposées parallèlement et au-dessus d'une fente formant une ouverture et de la feuille à inspecter. Les boîtiers sont régulièrement décalés les uns par rapport aux autres le long de l'ouverture. Le deuxième élément optique récepteur présente la même configuration, les boîtiers étant disposés parallèlement et en-dessous d'une ouverture et de la feuille à inspecter.

Cependant, tous ces boîtiers muni de leur émetteur de lumière doivent être disposés d'un côté de la feuille à inspecter en étant parfaitement alignés avec les boîtiers muni de leur récepteur de lumière correspondants disposés de l'autre côté de la feuille à inspecter. Ceci demande à l'opérateur une précision et un temps de réglage important. Ce temps de réglage est fonction du nombre de boîtiers montés le long de la laize du support à analyser.

Un tel agencement de boîtiers est ainsi inapplicable dans le cas de support à analyser présentant une laize allant par exemple jusqu'à 4000mm. Changer un émetteur ou un récepteur de lumière en cas de panne ou effectuer une opération de maintenance sur un boîtier s'avère chronophage. De plus, par la multiplication des boîtiers, le risque d'erreur d'intervention sur le mauvais boîtier est accru.

Le document US 5,164,603 divulgue un système d'inspection en réflexion avec une série de modules qui s'attachent bout-à-bout. Les modules du milieu diffèrent des modules des bords en ce sens qu'ils n'ont pas de parois latérales afin de pouvoir être mis bout-à-bout de manière très serrée. Ce serrage des module permet une inspection de toute la lèse, en projetant une ligne continue de lumière sur la surface à inspecter.

### Exposé de l'invention

Un objectif principal de la présente invention consiste à mettre au point un dispositif de détection. Un deuxième objectif est de réaliser un dispositif apte à analyser l'entier de la laize d'un support plan. Un troisième objectif est de prévoir un dispositif permettant de réduire le temps d'intervention pour pouvoir être nettoyé ou remplacé. Un quatrième objectif est de résoudre les problèmes techniques mentionnés pour le document de l'état de la technique. Un autre objectif encore est celui de réussir à placer un dispositif de détection dans une machine de métallisation, présentant de fortes contraintes de température, de vide et de poussières.

Le premier et le deuxième objectif sont atteints avec le dispositif de la revendication 1.

Dans l'ensemble de la description, l'élément émetteur-récepteur est défini comme étant un élément optoélectronique émetteur avec une source de lumière apte à émettre de la lumière, ou un élément optoélectronique récepteur avec un récepteur apte à capter de la lumière.

Autrement dit, avec plusieurs éléments émetteurs et/ou récepteurs dans un seul boîtier, les fentes des éléments émetteurs et/ou récepteurs sont disposées en alternance et en quinconce. Avec plusieurs boîtiers dans une seule rampe, les fentes des éléments émetteurs et/ou récepteurs sont également disposées en alternance et en quinconce. Les fentes sont alternées à la fois dans un même boîtier et dans plusieurs boîtiers juxtaposés. Les fentes sont alternées et disposées les unes par rapport aux autres, de façon à ce qu'il n'y ait aucune interruption dans le balayage de la surface.

Un ou plusieurs des éléments optoélectroniques sont facilement interchangeables dans un même boîtier. Un ou plusieurs des boîtiers sont facilement interchangeables dans une même rampe. Le nombre de boîtiers dans la rampe et donc de pièces mécaniques impliquées pour assurer au final la détection est réduit.

Dans un autre aspect de l'invention, une machine de métallisation d'un support plan comprend un dispositif de détection, présentant une ou plusieurs caractéristiques techniques décrites et revendiquées, apte à analyser l'entier de la laize du support métallisé.

### Brève description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue latérale synoptique d'une machine de métallisation comprenant un dispositif de détection selon l'invention ;
- la Figure 2 représente une vue en perspective du dispositif de détection selon une première forme de réalisation ; et
- la Figure 3 représente une vue en perspective du dispositif de détection selon une deuxième forme de réalisation.

### Exposé détaillé de modes de réalisation préférés

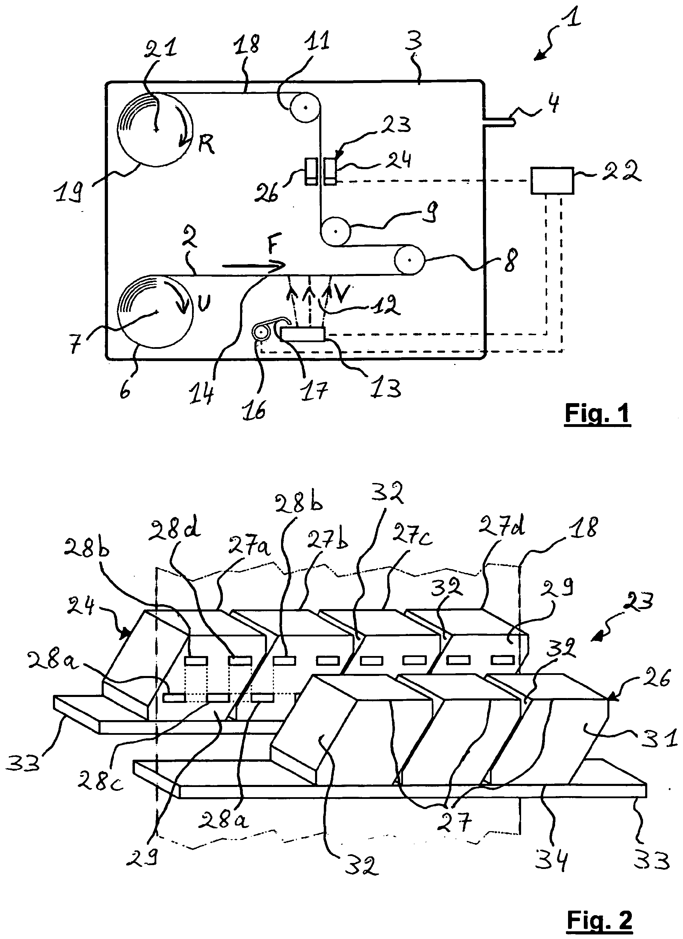

Comme l'illustre la Figure 1, une machine d'enduction, dans ce cas de métallisation sous vide 1, d'un support en bande continue ou web ou film vierge devant être enduit et donc métallisé 2 comprend une enceinte étanche 3. Un vide d'air est réalisé dans l'enceinte 3 grâce à un système de pompes à vide (non représenté) et de canalisations 4.

Le film vierge 2 est disponible sous la forme d'une première bobine 6. Avant de démarrer la production, l'enceinte est ouverte et la première bobine est insérée dans l'enceinte 3 en étant montée sur un axe de rotation 7. L'extrémité libre du film vierge 2 est tirée à travers l'enceinte 3. L'enceinte 3 est refermée de manière étanche, le vide est fait dans l'enceinte 3, puis le film vierge 2 commence à être déroulé (Flèche U en Figure 1) dans l'enceinte 3 sous vide.

La machine 1 comprend des moyens pour faire avancer et faire défiler (Flèche F) le film vierge 2 à partir de la première bobine 6. Ces moyens se présentent par exemple sous la forme de trois rouleaux de renvoi 8, 9 et 11. Ces moyens assurent également une tension du film vierge 2 tout au long du processus de métallisation. Les moyens pour faire défiler le film vierge 2 peuvent être plus complexes, variant en fonction du type de machine 1, de la laize du film 2 et du matériau du film 2.

Entre la première bobine 6 et le premier rouleau de renvoi 7, le film vierge 2 passe par une zone de métallisation 12. Un banc de vaporisation 13 est disposé à proximité de l'une des surfaces, ici la surface inférieure 14 du film vierge 2. Le banc 13 se présente sous la forme de plusieurs évaporateurs ou creusets céramiques résistifs chauffés disposés sur la laize du film vierge 2 et assurant la vaporisation du métal.

Un agencement de vaporisation 16 alimente en continu le banc 13 avec un matériau d'enduction, dans ce cas un matériau métallique à vaporiser à la surface du film vierge défilant. Le matériau métallique est ici de l'aluminium de haute pureté. L'agencement 16 comprend des bobines de fil d'aluminium 17 se déroulant. Chaque fil 17 entre progressivement dans chacun des creusets et fond à cet endroit. L'aluminium est vaporisé (Flèches V) à la surface inférieure 14 du film vierge 2 pour donner le film métallisé, c'est-à-dire aluminisé 18.

Dans certaines machines, des moyens de traitement à plasma (non visibles) peuvent être placés avant ou après la zone de métallisation 12. Ces moyens de traitement servent à nettoyer et préparer au revêtement d'aluminium la surface 14 du film vierge 2 ou à traiter la surface aluminisée du film aluminisé 18. La zone de métallisation 12 peut comprendre des moyens de refroidissement (non visibles) du film vierge 2 en cours de métallisation.

Après le troisième rouleau de renvoi 11, le film aluminisé 18 est enroulé (Flèche R en Figure 1) sur une deuxième bobine tracteur 19 montée sur un axe de rotation 21. En fin de processus de métallisation, et dès qu'une partie ou la totalité de la bobine 6 de film vierge 2 est aluminisée, la machine 1 est arrêtée. L'enceinte 3 est remise à pression atmosphérique grâce aux canalisations 4. L'enceinte 3 est ouverte. La deuxième bobine 19 de film aluminisé 18 est sortie de l'enceinte 3.

Une unité de pilotage 22 de la machine 1 permet à un opérateur de régler de nombreux paramètres, tels que vitesse de déroulement de la première bobine 6, vitesse de défilement du film vierge 2 et du film aluminisé 18, puissance de chauffe de chacun des creusets de vaporisation 13, quantité de fils d'aluminium 17 arrivant pour être vaporisés, tension du film vierge 2 et du film aluminisé 18, vitesse d'enroulement de la deuxième bobine 19, et d'autres encore.

La machine 1 comprend un dispositif 23 pour déterminer la qualité de la couche d'aluminium enduite à la surface du film aluminisé 18. Le dispositif 23 est positionné dans l'enceinte 3 entre le banc de vaporisation 13 et la deuxième bobine 19, c'est-à-dire en aval de la zone de métallisation 12. Le dispositif 23 est par exemple inséré dans un intervalle compris entre le deuxième 9 et le troisième rouleau de renvoi 11.

Le dispositif 23 peut comprendre une première rampe émettrice 24. Les boîtiers 27 de la rampe émettrice 24 intègrent uniquement au moins deux éléments émetteurs. Dans cet exemple, tous les éléments optoélectroniques sont des éléments émetteurs. Le dispositif 23 peut comprendre une deuxième rampe réceptrice 26. Les boîtiers 27 de la rampe réceptrice 26 intègrent au moins deux éléments récepteurs. Dans cet exemple, tous les éléments optoélectroniques sont des éléments récepteurs. Une alternance d'éléments émetteurs et d'éléments récepteurs sur une même rampe reste possible.

Dans le cas d'une détection par réflexion sur une seule face du film aluminisé 18, la rampe émettrice 24 et la rampe réceptrice 26 sont du même côté. Dans le cas d'une détection par transmission, la rampe émettrice 24 et la rampe réceptrice 26 peuvent favorablement être disposées respectivement l'une en face de l'autre, et de part et d'autre du film aluminisé 18.

De manière avantageuse, le dispositif 23 est muni de moyens pour détecter en continu des trous dans la couche d'aluminium du film aluminisé défilant 18. De manière avantageuse, le dispositif 23 est également muni de moyens pour mesurer en continu une densité optique ou OD pour « optical density » du film aluminisé défilant 18. Le dispositif 23 est connecté et communique avec l'unité de pilotage 22 de la machine 1.

Dans cet exemple de réalisation, la rampe émettrice 24 est placée d'un côté du film aluminisé 18, et possède plusieurs sources de lumière, aptes à émettre de la lumière. La source est par exemple de type LED. La rampe réceptrice 26 est placée de l'autre côté du film aluminisé 18, et possède plusieurs récepteurs de lumière, aptes à capter la lumière transmise à travers le film aluminisé 18. Le récepteur est par exemple de type photodiode.

Selon l'invention, le dispositif 23, et ainsi la rampe émettrice 24 et la rampe réceptrice 26, comprennent plusieurs modules ou boîtiers 27, 27a, 27b, 27c et 27d. Les boitiers 27, 27a, 27b, 27c et 27d comprennent chacun les moyens pour détecter en continu les trous et les moyens pour mesurer en continu la densité optique. Dans chaque boîtier 27, 27a, 27b, 27c et 27d est logé soit l'élément optoélectronique émetteur, soit l'élément optoélectronique récepteur. Chaque élément optoélectronique émetteur et élément optoélectronique récepteur comprend des moyens de détection de trous et/ou de la densité optique du film aluminisé 18.

Chaque boîtier 27 intègre au moins deux éléments émetteurs ou au moins deux éléments récepteurs. Les boîtiers 27 intégrant au moins deux éléments émetteurs et les boîtiers intégrant au moins deux éléments récepteurs sont disposés avantageusement respectivement l'un en face de l'autre de part et d'autre du film aluminisé 18. Dans cet exemple de réalisation le plus favorable, le boîtier 27 comprend quatre éléments émetteurs ou récepteurs.

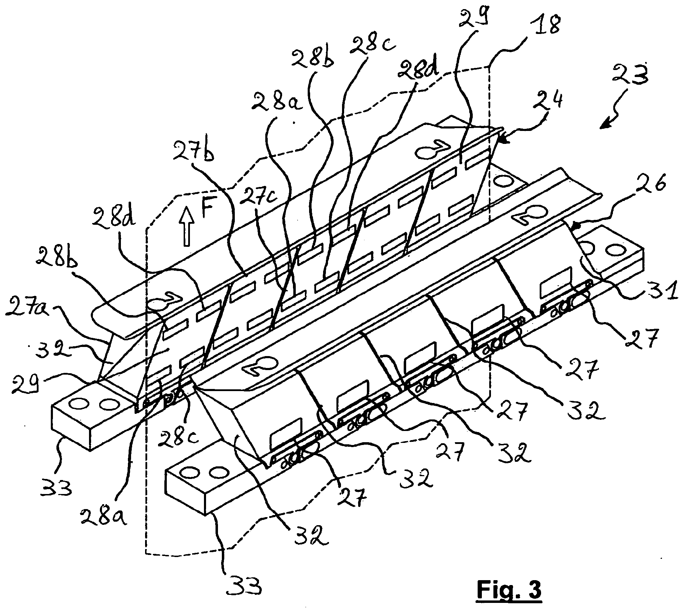

Comme le montre les Figures 2 et 3, le boîtier 27, 27a, 27b, 27c et 27d est pourvu de quatre fentes d'émission ou de quatre fentes de réception de lumière 28a, 28b, 28c et 28d, chacune correspondant respectivement à la fente d'émission de la LED de l'élément émetteur ou à la fente de réception de la photodiode de l'élément récepteur. Les quatre fentes 28a, 28b, 28c et 28d ont des dimensions équivalentes en longueur et en largeur et sont ménagées dans la face avant 29 du boîtier 27, 27a, 27b, 27c et 27d.

La deuxième fente 28b d'un deuxième élément agencé à l'intérieur du boîtier 27a est parallèle et décalée vers la droite et vers le haut par rapport à la première fente 28a d'un premier élément agencé à l'intérieur du même boîtier 27a. La troisième fente 28c d'un troisième élément agencé à l'intérieur du boîtier 27a est parallèle et décalée vers la droite et vers le bas par rapport à la deuxième fente 28b du deuxième élément agencé à l'intérieur du même boîtier 27a. La quatrième fente 28d d'un quatrième élément agencé à l'intérieur du boîtier 27a est parallèle et décalée vers la droite et vers le haut par rapport à la troisième fente 28c du troisième élément agencé à l'intérieur du même boîtier 27a.

Dans la rampe, les deux boîtiers successifs 27a et 27b sont agencés entre eux de sorte que la première fente 28a d'un premier élément du deuxième boîtier immédiatement adjacent 27b est parallèle et décalée vers le bas par rapport à la quatrième fente 28d du quatrième élément du premier boîtier 27a qui précède. Les boîtiers 27, 27a, 27b, 27c et 27d sont disposés les uns par rapport aux autres, de façon à ce que le dispositif 23 soit apte à analyser 100% de la laize du film aluminisé 18.

Les fentes 28a et 28b, 28c et 28d sont alternativement et successivement décalées les unes par rapport aux autres. Les fentes 28a, 28b, 28c et 28d sont disposées sur deux lignes dans un boîtier 27a, ainsi que dans la succession des boîtiers 27b, 27c et 27d.

La deuxième fente 28b et la quatrième fente 28d sont alignées sur une première ligne supérieure. La première fente 28a et la troisième fente 28c sont alignées sur une deuxième ligne inférieure. Les fentes 28b et 28d sur la ligne supérieure sont décalées dans le sens latéral, c'est-à-dire dans le sens de la laize, par rapport aux fentes 28a et 28c sur la ligne inférieure.

L'ensemble des fentes 28a, 28b, 28c et 28d permet de couvrir toute la laize du film aluminisé 18 sans interruption d'émission ou de réception de lumière. Les fentes 28a, 28b, 28c et 28d mises bout à bout forment une ligne continue d'émission ou de réception de lumière.

La longueur des fentes 28a, 28b, 28c et 28d, le nombre d'éléments émetteur-récepteur par boîtier 27 et le nombre de boîtiers 27 sont avantageusement choisis en fonction la longueur des creusets de vaporisation d'aluminium 13 et de la laize du film aluminisé 18. A chaque boîtier 27 correspond un creuset de vaporisation 13. Si des défauts sont détectés dans le film aluminisé 18 et correspondent à un boîtier particulier 27, l'opérateur en déduit que les paramètres de fonctionnement du banc de vaporisation 13 correspondant doivent être ajustés ou que ce dernier doit être nettoyé ou remplacé.

La longueur des fentes 28a, 28b, 28c et 28d, le nombre d'éléments émetteur-récepteur par boîtier 27, ainsi que le nombre de boîtiers 27 permettent de couvrir toute la gamme des laizes standards de 375 mm à 4075 mm.

Les boîtiers 27 sont sensiblement hexaédriques, par exemple sensiblement parallélépipédiques ou très préférentiellement sensiblement rhomboédrique. La face avant 29 et la face arrière 31 sont équivalentes, avec une forme sensiblement en losange, et les quatre autres faces sont carrées ou rectangulaires.

Les boîtiers 27 sont constitués avec deux faces latérales inclinées 32. La face inclinée 32 du premier boîtier 27a vient se positionner à proximité immédiate de l'une des faces inclinée 32 du deuxième boîtier 27b qui lui succède immédiatement. Et l'autre face inclinée 32 du deuxième boîtier 27b qui suit vient se positionner à proximité immédiate de l'une des faces inclinée 32 du troisième boîtier 27c qui suit, et ainsi de suite dans la succession des boîtiers sur toute la laize du film aluminisé 18. Dans la première forme de réalisation de la Figure 2, les boîtiers 27 de la rampe réceptrice 26 sont différents et sont l'image miroir des boîtiers 27 de la rampe émettrice 24.

Une telle forme sensiblement en rhomboèdre permet le décalage en quinconce des fentes 28a, 28b, 28c et 28d sans avoir d'espace non couvert par les flux lumineux issus de tous les éléments optoélectroniques émetteurs à destination des éléments optoélectroniques récepteurs.

Une telle forme sensiblement en rhomboèdre permet à l'opérateur de changer rapidement de boîtier 27. L'opérateur sort le boîtier à changer 27b par une opération d'extraction avec mouvement le long des faces inclinées 32 du boîtier précédent 27a et du boîtier suivant 27c. L'opérateur replace le nouveau boîtier 27b par une opération d'insertion avec mouvement le long des faces inclinées 32 du boîtier précédent 27a et du boîtier suivant 27c. Cette opération de changement se fait ainsi en biais. Cette opération de changement est plus ergonomique dans l'environnement encombré de l'enceinte 3.

Dans la deuxième forme de réalisation particulièrement avantageuse de la Figure 3, un seul et unique modèle de boîtier 27 permet de loger à la fois les éléments optoélectroniques émetteurs qui font partie de la rampe réceptrice 26 et les éléments optoélectroniques récepteurs qui font partie de la rampe réceptrice 26.

De ce fait, les boîtiers 27 de la rampe réceptrice 26 vont être disposés de manière inversée par rapport aux boîtiers 27 de la rampe émettrice 24. Les fentes 28 des boitiers 27 de la rampe réceptrice 26 sont disposées face aux fentes des boitiers 27 de la rampe émettrice 24. La face latérale 32 des boîtiers 27 de la rampe émettrice 24 est inclinée dans un sens. La face latérale 32 des boîtiers 27 de la rampe réceptrice 26 est inclinée dans l'autre sens.

Pour leur alignement, les boîtiers 27 sont tous fermement maintenus en étant solidarisés à un rail 33 par leur face inférieure 34 perpendiculaire à la face avant 29. Les boîtiers 27 sur les deux rails 33 correspondent respectivement à la rampe émettrice 24 avec plusieurs éléments optoélectroniques émetteurs logés dans les boîtiers 27 et à la rampe réceptrice 26 avec plusieurs éléments optoélectroniques récepteurs logés dans les boîtiers 27.

Les rails 33 sont parallèles entre eux et placés perpendiculairement de part et d'autre sur la laize du film aluminisé 18. Les deux rails 33 sont parfaitement alignés entre eux, assurant un alignement des boîtiers 27 et par voie de conséquence un alignement des fentes 28a, 28b, 28c et 28d les unes exactement en face des autres. Les rails 33 assurent la communication des éléments optoélectroniques émetteurs et récepteurs avec l'unité de pilotage 22 de la machine 1.

La présente invention n'est pas limitée aux modes de réalisation décrits et illustrés. De nombreuses modifications peuvent être réalisées, sans pour autant sortir du cadre défini par la portée du jeu de revendications.

Le dispositif de détection de l'invention 23 peut également être monté dans tous types de machines de production d'emballages, telles que des machines d'impression de supports plans en plaques ou de support en bande continue, ou d'autres encore. Le dispositif de détection de l'invention 23 peut également être monté mobile sur une rampe coulissante au-dessus d'un support plan 18 qui lui reste fixe.

## Revendications

1. Dispositif de détection apte à analyser la surface d'un support plan (18), comprenant au moins une rampe (24, 26), formée avec au moins deux boîtiers (27a, 27b),
les deux boîtiers (27a, 27b) étant disposés de manière adjacente, chaque boîtier (27a, 27b) intégrant au moins deux éléments émetteur-récepteur ainsi qu'une fente par élément émetteur-récepteur pour permettre l'émission ou la réception de lumière à travers le boîtier,
chaque élément émetteur-récepteur étant un élément optoélectronique émetteur avec une source de lumière ou un élément optoélectronique récepteur apte à capter de la lumière ;
les éléments de chaque boîtier
étant agencés entre eux de sorte que la fente (28b, 28d) d'un élément est parallèle et décalée par rapport à la fente (28a, 28c) de l'autre élément,
les boîtiers (27a, 27b) étant agencés entre eux de sorte que la fente (28a) de l'un des boîtiers (27b) est parallèle et décalée par rapport à la fente (28d) de l'autre des boîtiers immédiatement adjacent (27a),
les fentes (28a, 28b, 28c, 28d) sont alternativement et successivement décalées les unes par rapport aux autres, en étant disposées sur deux lignes,
l'ensemble des fentes (28a, 28b, 28c, 28d) permettant de couvrir toute la laize du support (18) sans interruption d'émission-réception de lumière.

2. Dispositif selon la revendication 1, **caractérisé en ce que** le boîtier (27) comprend quatre éléments.

3. Dispositif selon la revendication 1 ou 2, **caractérisé en ce que** les boîtiers (27, 27a, 27b, 27c, 27d) sont sensiblement hexaédriques, avec une face avant (29) dans laquelle sont ménagées les fentes (28a, 28b, 28c, 28d) et deux faces latérales inclinées (32), la face inclinée (32) de l'un des boîtiers (27a) venant se positionner à proximité de la face inclinée (32) de l'autre des boîtiers (27b).

4. Dispositif selon l'une quelconque des revendications précédentes, **caractérisé en ce que** l'élément émetteur-récepteur est un élément émetteur, les boîtiers (27a, 27b, 27c, 27d) intégrant au moins deux éléments émetteurs formant une rampe émettrice (24), et **en ce que** l'élément émetteur-récepteur est un élément récepteur, les boîtiers (27) intégrant au moins deux éléments récepteurs formant une rampe réceptrice (26).

5. Dispositif selon la revendication 4, **caractérisé en ce que** la rampe émettrice (24) est disposée respectivement en face de la rampe réceptrice (26), et de l'autre côté du support (18).

6. Dispositif selon la revendication 4 ou 5, **caractérisé en ce que** les boîtiers (27) de la rampe réceptrice (26) sont disposés symétriquement et de manière inversée par rapport aux boîtiers (27) de la rampe émettrice (24), les fentes (28) des boitiers (27) de la rampe réceptrice (26) étant disposées face aux fentes des boitiers (27) de la rampe émettrice (24).

7. Dispositif selon l'une quelconque des revendications précédentes, **caractérisé en ce que** les boîtiers (27, 27a, 27b, 27c, 27d) sont montés sur rail (33).

8. Dispositif selon la revendication 7, **caractérisé en ce que** les boîtiers (27, 27a, 27b, 27c, 27d) sont solidarisés à un rail (33) par leur face inférieure (34) perpendiculaire à leur face avant (29).

9. Dispositif selon l'une quelconque des revendications précédentes, **caractérisé en ce que** les éléments comprennent des moyens de détection de trous et/ou de la densité optique d'un support enduit (18).

10. Machine d'enduction d'un support plan, **caractérisée en ce qu'**elle comprend un dispositif de détection (23) selon l'une quelconque des revendications précédentes, apte à analyser l'entier de la laize d'un support enduit (18).

11. Machine d'enduction par évaporation sous vide d'un matériau d'enduction selon la revendication 10, **caractérisée en ce que** la longueur des fentes (28a, 28b, 28c, 28d), le nombre de boîtiers (27, 27a, 27b, 27c, 27d) et le nombre d'éléments émetteur-récepteur par boîtier (27) sont choisis en fonction de la longueur des creusets de vaporisation du matériau d'enduction (13) et de la laize du support (18).

## Patentansprüche

1. Detektionsvorrichtung, welche geeignet ist, die Oberfläche eines ebenen Trägers (18) zu analysieren, umfassend mindestens eine Rampe (24, 26), die mit mindestens zwei Gehäusen (27a, 27b) gebildet ist,
wobei die beiden Gehäuse (27a, 27b) benachbart angeordnet sind, wobei jedes Gehäuse (27a, 27b) mindestens zwei Emitter-Empfänger-Elemente sowie einen Spalt durch das Emitter-Empfänger-Element integriert, um die Emission oder den Empfang von Licht quer durch das Gehäuse zu gestatten,
wobei jedes Emitter-Empfänger-Element ein optoelektronisches Emitter-Element mit einer Lichtquelle oder ein optoelektronisches Empfänger-Element, das geeignet ist, Licht abzufangen, darstellt;
wobei die Elemente jedes Gehäuses untereinander derart angeordnet sind, dass der Spalt (28b, 28d) eines Elements parallel zu und versetzt in Bezug auf den Spalt (28a, 28c) des anderen Elements ist,
wobei die Gehäuse (27a, 27b) untereinander derart angeordnet sind, dass der Spalt (28a) eines der Gehäuse (27b) parallel zu und versetzt in Bezug auf den Spalt (28d) des anderen unmittelbar benachbarten Gehäuses (27a) ist,
wobei die Spalte (28a, 28b, 28c, 28d) abwechselnd und aufeinanderfolgend voneinander versetzt sind, indem sie in zwei Reihen angeordnet sind,
wobei die Gesamtheit der Spalte (28a, 28b, 28c, 28d) gestattet, die gesamte Bahn des Trägers (18) ohne Unterbrechung der Emission/des Empfangs von Licht abzudecken.

2. Vorrichtung nach Anspruch 1, **dadurch gekennzeichnet, dass** das Gehäuse (27) vier Elemente umfasst.

3. Vorrichtung nach Anspruch 1 oder 2, **dadurch gekennzeichnet, dass** die Gehäuse (27, 27a, 27b, 27c, 27d) im Wesentlichen hexaedrisch mit einer Vorderfläche (29), in der die Spalte (28a, 28b, 28c, 28d) aufgenommen sind, und zwei geneigten Flächen (32) sind, wobei die geneigte Fläche (32) eines der Gehäuse (27a) in der Nähe der geneigten Fläche (32) eines anderen der Gehäuse (27b) positioniert ist.

4. Vorrichtung nach einem der vorstehenden Ansprüche, **dadurch gekennzeichnet, dass** das Emitter-Empfänger-Element ein Emitter-Element ist, wobei die Gehäuse (27a, 27b, 27c, 27d) mindestens zwei Emitter-Elemente integrieren, die eine Emitter-Rampe (24) bilden, und dadurch, dass das Emitter-Empfänger-Element ein Empfänger-Element ist, wobei die Gehäuse (27) mindestens zwei Empfänger-Elemente integrieren, die eine Empfänger-Rampe (26) bilden.

5. Vorrichtung nach Anspruch 4, **dadurch gekennzeichnet, dass** die Emitter-Rampe (24) jeweils gegenüber der Empfänger-Rampe (26) und auf der anderen Seite des Trägers (18) angeordnet ist.

6. Vorrichtung nach Anspruch 4 oder 5, **dadurch gekennzeichnet, dass** die Gehäuse (27) der Empfänger-Rampe (26) symmetrisch und umgekehrt in Bezug auf die Gehäuse (27) der Emitter-Rampe (24) angeordnet sind, wobei die Spalte (28) der Gehäuse (27) der Empfänger-Rampe (26) gegenüber den Spalten der Gehäuse (27) der Emitter-Rampe (24) angeordnet sind.

7. Vorrichtung nach einem der vorhergehenden Ansprüche, **dadurch gekennzeichnet, dass** die Gehäuse (27, 27a, 27b, 27c, 27d) auf einer Schiene (33) montiert sind.

8. Vorrichtung nach Anspruch 7, **dadurch gekennzeichnet, dass** die Gehäuse (27, 27a, 27b, 27c, 27d) mit einer Schiene (33) durch ihre untere Fläche (34) rechtwinklig zu ihrer Vorderfläche (29) fest verbunden sind.

9. Vorrichtung nach einem der vorstehenden Ansprüche, **dadurch gekennzeichnet, dass** die Elemente Mittel zur Detektion von Löchern und/oder der optischen Dichte eines beschichteten Trägers (18) umfassen.

10. Maschine zur Beschichtung eines ebenen Trägers, **dadurch gekennzeichnet, dass** diese eine Detektionsvorrichtung (23) nach einem der vorhergehenden Ansprüche umfasst, die geeignet ist, die gesamte Bahn eines beschichteten Trägers (18) zu analysieren.

11. Maschine zur Beschichtung eines Beschichtungsmaterials durch Aufdampfen im Vakuum nach Anspruch 10, **dadurch gekennzeichnet, dass** die Länge der Spalte (28a, 28b, 28c, 28d), die Anzahl der Gehäuse (27, 27a, 27b, 27c, 27d) und die Anzahl der Emitter-Empfänger-Elemente pro Gehäuse (27) als Funktion der Länge der Verdampfertiegel des Beschichtungsmaterials (13) und der Bahn des Trägers (18) ausgewählt sind.

## Claims

1. Detection device able to analyse the surface of a planar substrate (18), comprising at least one ramp (24, 26), formed with at least two housings (27a, 27b), the two housings (27a, 27b) being arranged in an adjacent manner, each housing (27a, 27b) including at least two emitter-receivers as well as a slit in the emitter-receiver element to allow the emission or reception of light through the housing, each emitter-receiver element being an optoelectronic emitter with a light source or an optoelectronic receiver for capturing light; the elements of each housing being arranged among each other in such a way that the slit (28b, 28d) of one element is parallel and offset with respect to the slit (28a, 28c) of the other element, the housings (27a, 27b) being arranged among each other in such a way that the slit (28a) of one of the housings (27b) is parallel and offset with respect to the slit (28d) of the other of the immediately adjacent housings (27a), the slits (28a, 28b, 28c, 28d) are alternatively and successively offset from one another being arranged in two rows, the assembly of slits (28a, 28b, 28c, 28d) making it possible to cover the entire breadth of the substrate (18) without interrupting the emission or reception of light.

2. Device according to claim 1, **characterised in that** the housing (27) comprises four elements.

3. Device according to claim 1 or 2, **characterised in that** the housings (27, 27a, 27b, 27c, 27d) are substantially hexahedral, with a front face (29) in which the slits (28a, 28b, 28c, 28d) are formed, and two inclined lateral faces (32), the inclined face (32) of one of the housings (27a) then being positioned close to the inclined face (32) of the other housing (27b).

4. Device according to any one of the preceding claims, **characterised in that** the emitter-receiver element is an emitter element, the housings (27a, 27b, 27c, 27d) integrating at least two emitter elements forming an emitter ramp (24), and **in that** the emitter-receiver element is a receiver element, the housings (27) including at least two receiver elements forming a receiver ramp (26).

5. Device according to claim 4, **characterised in that** the emitter ramp (24) is arranged respectively opposite the receiver ramp (26), and on the other side of the substrate (18).

6. Device according to claim 4 or 5, **characterised in that** the housings (27) of the receiver ramp (26) are arranged symmetrically and in a manner offset with respect to the housings (27) of the emitter ramp (24), the slits (28) of the housings (27) of the receiver ramp (26) being arranged facing the slits of the housings (27) of the emitter ramp (24).

7. Device according to any one of the preceding claims, **characterised in that** the housings (27, 27a, 27b, 27c, 27d) are rail mounted (33).

8. Device according to claim 7, **characterised in that** the housings (27, 27a, 27b, 27c, 27d) are connected to a rail (33) by their inside face (34) perpendicular to their front face (29).

9. Device according to any one of the preceding claims, **characterised in that** the elements comprise means of detecting holes and/or the optical density of a coated substrate (18).

10. Machine for coating a planar substrate, **characterised in that** it comprises a detection device (23) according to any one of the preceding claims, able to analyse the entire breadth of a coated substrate (18).

11. Machine for coating with a coating material by means of vacuum evaporation according to claim 10, **characterised in that** the length of the slits (28a, 28b, 28c, 28d), the number of housings (27, 27a, 27b, 27c, 27d) and the number of emitter-receiver elements per housing (27) are selected depending on the length of the vaporising crucible of the coating material (13) and the breadth of the substrate (18).
